# EUROPÄISCHE PATENTANMELDUNG

(11) **EP 2 431 216 A1**
(43) Veröffentlichungstag der Anmeldung: **21.03.2012**
(21) Anmeldenummer: 10177813.2
(22) Anmeldetag: 21.09.2010
(51) Int. Cl.: B60L 11/18, B60L 11/12, B60K 1/04

(54) **Elektrofahrzeug mit Option zur Reichweitenverlängerung**

(71) Anmelder: SIEMENS AKTIENGESELLSCHAFT, 80333 München (DE)
(72) Erfinder: Göhringer, Jürgen, 90592, Schwarzenbruck (DE)

(57) **Zusammenfassung**

Ein erfindungsgemäßes Elektrofahrzeug (1) umfasst einen Elektromotor (2) als Antriebsmotor, eine aufladbare Batterie (3) zur Versorgung des Elektromotors (2) mit elektrischer Energie, sowie einen ersten Aufnahmeplatz (5) zur Aufnahme eines Generators (6) zur Erzeugung von elektrischer Energie, und eine erste Schnittstelleneinrichtung (4) zur Verbindung der Batterie (3) mit dem Generator (6). Dabei wird das Laden der Batterie (3) mittels des Generators (6) ermöglicht, wobei der erste Aufnahmeplatz (5) zur temporären Aufnahme des Generators (6) vorbereitet, aber nicht permanent belegt ist.

## Beschreibung

Die Erfindung betrifft ein Elektrofahrzeug.

Im Zuge der immer weiter fortschreitenden Abkehr von fossilen Brennstoffen als Energielieferant zum Antreiben von Elektrofahrzeugen nimmt die Bedeutung von elektrisch angetriebenen Autos und anderen Fahrzeugen zu. Neben reinen Elektrofahrzeugen sind aus dem Stand der Technik weiterhin so genannte Hybrid-Fahrzeuge bekannt, welche neben einem Elektromotor noch einen Verbrennungsmotor umfassen.

Derartige Fahrzeuge haben folglich mindestens zwei verschiedene Motortypen an Bord, wobei entweder der Elektromotor oder der Verbrennungsmotor als Hauptantriebsmotor vorgesehen ist, und der jeweils andere den Antrieb unterstützt, je nach Fahrsituation.

Meist wird hierbei bei geringerer Leistungsanforderung der Elektromotor als Hauptantriebsmotor verwendet, und der Verbrennungsmotor übernimmt seine Antriebsaufgaben erst bei höheren geforderten Leistungen. Dadurch wird insbesondere bei Stadtfahrten ein geringerer Verbrauch erzielt.

Als weiteres Konzept ist hierbei auch bekannt, den Verbrennungsmotor als Hauptantriebsmotor auszulegen, und den Elektromotor je nach Fahrsituation unterstützend hinzuzuschalten, wobei im Bereich kleiner Leistungsanforderungen der Elektromotor den Antrieb des Fahrzeugs alleine im Rahmen seiner zur Verfügung stehenden Reichweite übernehmen kann.

Die bisher genannten Konzepte vereint der Gedanke, dass beide Motortypen direkt auf den Antrieb des Fahrzeugs einwirken, und die jeweilige Lastverteilung auf diese Motoren je nach Fahrsituation angepasst wird.

Ein weiteres bekanntes Konzept besteht darin, dass in einem Elektrofahrzeug ebenfalls zwei verschiedene Motortypen, nämlich ein Elektromotor und ein Verbrennungsmotor, vorhanden sind, wobei jedoch der Antrieb des Elektrofahrzeugs ausschließlich durch den Elektromotor erfolgt, und der an Bord befindliche Verbrennungsmotor bedarfsweise als Ladequelle für die Batterie des Elektromotors arbeitet. Ein derartiges Konzept ist beispielsweise vom Automobilhersteller Opel vorgestellt worden in Form dessen Fahrzeugs Opel Ampera.

Ein Vorteil dieses Konzepts besteht darin, dass der Verbrennungsmotor lediglich für das Laden der Batterie, aber nicht für den Antrieb des Elektrofahrzeugs ausgelegt werden muss. Daher kann in vielen Fällen ein relativ kleiner Verbrennungsmotor ausreichend sein.

Weiterhin überwindet dieses Konzept das Reichweitenproblem reiner Elektrofahrzeuge, die derzeit eine begrenzte Reichweite beispielsweise von 150 km haben. Damit sind solche Fahrzeuge ohne Ladeunterbrechung für mittlere und größere Entferungen noch nicht brauchbar. Die eingangs bereits erwähnten anderen Konzepte für Hybridfahrzeuge haben ebenfalls im Wesentlichen das Ziel, die begrenzte Reichweite von Elektrofahrzeugen ohne Ladestopp zu überwinden.

Allen bisher genannten Hybrid-Konzepten ist jedoch weiterhin gemein, dass aufgrund des Vorhandenseins von mindestens zwei Motoren ein relativ hohes Fahrzeuggewicht in Kauf genommen werden muss. Des Weiteren sind bekannte Hybrid-Fahrzeuge nicht nur sehr schwer, sondern auch relativ teuer wegen deren komplexen Antriebssystems mit zwei Motoren und entsprechender Motorsteuerung.

Der Erfindung liegt daher die Aufgabe zugrunde, ein verbessertes Elektrofahrzeug anzugeben.

Die Aufgabe wird erfindungsgemäß gelöst durch ein Elektrofahrzeug mit einem Elektromotor als Antriebsmotor, einer aufladbaren Batterie zur Versorgung des Elektromotors mit elektrischer Energie, einem ersten Aufnahmeplatz zur Aufnahme eines Generators zur Erzeugung von elektrischer Energie, und einer ersten Schnittstelleneinrichtung zur Verbindung der Batterie mit dem Generator, so dass ein Laden der Batterie mittels vom Generator erzeugter elektrischer Energie ermöglicht ist, wobei der erste Aufnahmeplatz zur temporären Aufnahme des Generators vorbereitet, aber nicht permanent belegt ist.

Ein erfindungsgemäßes Elektrofahrzeug kann als Elektrofahrzeug mit so genanntem "Range-Extender" aufgefasst werden, wobei jedoch der Verbrennungsmotor zur Realisierung der Reichweitenverlängerung mittels Laden der Batterie nicht permanent während des Betriebs des Fahrzeugs an Bord ist.

Eine signifikante Reichweitenerhöhung bei einem erfindungsgemäßen Elektrofahrzeug wird durch das nur temporäre Mitführen eines "mobilen Range-Extenders" (Verbrennungsmotor) realisiert, der nur bei Bedarf in das Elektrofahrzeug eingesetzt wird. Der erste Aufnahmeplatz und die erste Schnittstelleneinrichtung sind dabei bevorzugt so ausgebildet, dass jeder normale Fahrzeugnutzer den Generator leicht ein- und ausbauen kann, beispielsweise mittels eines einfachen Einschub-und/oder Steckmechanismus.

Ein erfindungsgemäßes Elektrofahrzeug ist also zur einfachen und aufwandsarmen Aufnahme eines Generators zum Laden der Batterie ausgerüstet, umfasst jedoch den Generator selbst nicht als permanenten Bestandteil des Fahrzeugs.

Die Erfindung geht dabei von der Überlegung aus, dass nur in bestimmten Einsatzfällen des Elektrofahrzeugs eine über die normale Reichweite des Elektromotors mit Batterie hinausgehende, größere Reichweite erforderlich ist. In derartigen Situationen ist die normale Reichweite ausreichend, und ein permanentes Mitführen des Generators brächte nur Nachteile wie beispielsweise ein deutlich erhöhtes Gewicht des Elektrofahrzeugs und damit einhergehende erhöhte Betriebskosten. Weiterhin wäre das Elektrofahrzeug, wenn es serienmäßig sowohl den Elektromotor als auch den Verbrennungsmotor umfassen würde, unnötig teuer im Hinblick darauf, dass in sehr vielen Einsatzfällen der bloße Elektromotor mit Batterie ausreichend ist.

Gemäß der Erfindung entfällt somit aus dem serienmäßigen Lieferumfang des Elektrofahrzeugs der feste Einbau eines Verbrennungsmotors. Dadurch wird das Elektrofahrzeug leichter und billiger, bleibt aber dennoch einsatzfähig für sehr viele Anwendungsfälle. Der Generator wird nur bedarfsweise in das Elektrofahrzeug eingesetzt, beispielsweise bei längeren Fahrten in den Urlaub.

Der Generator ist bevorzugt ein mobiler Verbrennungsmotor.

Dabei ist denkbar, dass der mobile Verbrennungsmotor durch einen Fahrzeugnutzer angeschafft und bereitgehalten wird, oder aber dass der mobile Verbrennungsmotor durch einen kommerziellen Anbieter mit einem verteilten Distributorennetz an entsprechenden Verleihstellen vermietet wird. Insbesondere bei letzter Variante muss der Fahrzeugnutzer nicht die Investition für den mobilen Verbrennungsmotor tätigen, um im Bedarfsfall eine Reichweitenverlängerung realisieren zu können, sondern er mietet den mobilen Verbrennungsmotor vom kommerziellen Anbieter immer nur dann, wenn er ihn wirklich braucht, beispielsweise bei der bereits erwähnten längeren Fahrt in den Urlaub. Die Verleih- und Rückgabestationen eines derartigen kommerziellen Anbieters sind dabei bevorzugt in Art eines Tankstellen-Netzes örtlich verteilt, so dass ein Fahrzeugnutzer auf seinem Weg praktisch jederzeit sowohl einen mobilen Verbrennungsmotor mieten und in sein Elektrofahrzeug einsetzen kann, als auch einen temporär an Bord befindlichen mobilen Verbrennungsmotor zurückgeben kann. Der Fahrzeugnutzer ist dadurch eine typische Sorge im Zusammenhang mit Elektrofahrzeugen los, nämlich dass er infolge der beschränkten Reichweite von reinen Elektrofahrzeugen liegen bleiben könnte.

In einer weiteren bevorzugten Ausführungsform umfasst das Elektrofahrzeug weiterhin einen zweiten Aufnahmeplatz zur Aufnahme eines mobilen Brennstofftanks.

Hierbei ist der für einen Betrieb mit Verbrennungsmotor als Ladequelle für die Batterie erforderliche Brennstofftank des mobilen Verbrennungsmotors ebenfalls nicht fest ("serienmäßig") im Elektrofahrzeug verbaut, sondern das Elektrofahrzeug ist für die temporäre Aufnahme des Brennstofftanks (lediglich) vorbereitet. Der erfindungsgemäße Gedanke hierbei lehnt sich an die Überlegungen im Zusammenhang mit der temporären Aufnahme des Generators an.

Bei dieser Ausführungsform umfasst entweder das Elektrofahrzeug, der mobile Verbrennungsmotor, oder der mobile Brennstofftank eine zweite Schnittstelleneinrichtung zur Verbindung des mobilen Verbrennungsmotors mit dem mobilen Brennstofftank.

Diese bevorzugte Ausführungsform fördert den leichten Ein-und Ausbau des mobilen Brennstofftanks durch jeden beliebigen Fahrzeugnutzer. Der erfindungsgemäße Gedanke lehnt sich hierbei wiederum an die erste Schnittstelleneinrichtung des Elektrofahrzeugs an, welche ebenfalls das leichte Ein- und Ausbauen der dort betroffenen Komponente sicherstellen soll.

In einer weiteren bevorzugten Ausführungsform sind der mobile Verbrennungsmotor und der mobile Brennstofftank als eine Baueinheit ausgebildet.

Hierbei wird das Grundgewicht des erfindungsgemäßen Elektrofahrzeugs optimiert, da der für den Betrieb des Verbrennungsmotors als Ladequelle erforderliche Brennstofftank ebenfalls nur temporär und bedarfsweise vom Elektrofahrzeug mitgeführt werden muss.

Die Erfindung führt weiterhin zu einem Verfahren zum Betrieb eines Elektrofahrzeugs, wobei das Elektrofahrzeug umfasst: einen Elektromotor als Antriebsmotor, eine aufladbaren Batterie zur Versorgung des Elektromotors mit elektrischer Energie, einem ersten Aufnahmeplatz zur Aufnahme eines Generators zur Erzeugung von elektrischer Energie, eine erste Schnittstelleneinrichtung zur Verbindung der Batterie mit dem Generator, so dass ein Laden der Batterie mittels vom Generator erzeugter elektrischer Energie ermöglicht ist, mit folgenden Schritten:
- Fahren des Elektrofahrzeugs durch einen Fahrzeugnutzer zu einem Anbieter von mobilen Verbrennungsmotoren,
- Entgegennahme eines auf den ersten Aufnahmeplatz und die erste Schnittstelleneinrichtung abgestimmten mobilen Verbrennungsmotors vom Anbieter,
- Einbringen des mobilen Verbrennungsmotors in den ersten Aufnahmeplatz durch den Fahrzeugnutzer,
- Verbinden des mobilen Verbrennungsmotors mit der Batterie mittels der ersten Schnittstelleneinrichtung durch den Fahrzeugnutzer, und
- Fahren des Elektrofahrzeugs mit eingebautem mobilen Verbrennungsmotor, wobei zur Reichweitenerhöhung des Elektrofahrzeugs im Weiteren der mobile Verbrennungsmotor als Ladequelle für die Batterie arbeitet.

Bevorzugt ist der Anbieter hierbei ein kommerzieller Verleiher von mobilen Verbrennungsmotoren, und der Anbieter besitzt bevorzugt ein verteiltes Netz an Verleih- und Rückgabestationen für die mobilen Verbrennungsmotoren.

Wesentliche Vorteile eines erfindungsgemäßen Elektrofahrzeugs bzw. eines erfindungsgemäßen Verfahrens zum Betrieb eines Elektrofahrzeugs bestehen darin, dass zum Erzielen größerer Fahrzeug-Reichweiten ein mobiler Verbrennungsmotor nur temporär mitgeführt wird, wobei der Verbrennungsmotor dann das Laden der Fahrzeugbatterie übernimmt. Somit ist ein erfindungsgemäßes Elektrofahrzeug für den leichten Ein- und Ausbau eines mobilen Verbrennungsmotors durch einen beliebigen Fahrzeugnutzer vorbereitet, umfasst jedoch "serienmäßig" bei Auslieferung keinen Verbrennungsmotor. Letzterer wird nur bei Bedarf einer größeren Reichweite eingesetzt und bevorzugt durch Verleih- und Rückgabestationen in Art eines Tankstellen-Netzes bereitgestellt. Da unterschiedliche Fahrzeugtypen und Leistungsanforderungen unterschiedliche mobile Verbrennungsmotoren als Ladequellen für die Batterien der entsprechenden Elektrofahrzeuge erfordern, halten derartige kommerzielle Anbieter bevorzugt mobile Verbrennungsmotoren in verschiedenen Leistungsklassen und Bauformen zur Verfügung.

Das Einsetzen eines mobilen Verbrennungsmotors in das Elektrofahrzeug kann auch dann vorteilhaft sein, wenn zwar keine erhöhte Reichweite erforderlich ist, aber beispielsweise zum Aufladen der Fahrzeugbatterie über Nacht kein Stromanschluss zur Verfügung steht. Somit können derartige, gegebenenfalls angemietete mobile Verbrennungsmotoren auch als stationäre Ladequellen für den Elektromotor des erfindungsgemäßen Elektrofahrzeugs verwendet werden, indem sie temporär während des Ladevorgangs in das Elektrofahrzeug eingesetzt werden und nach Beendigung des Ladens wieder entfernt und gegebenenfalls zurückgegeben werden.

Weiterhin ist denkbar, dass ein mobiler Verbrennungsmotor als Ladequelle für eine ganze Flotte an erfindungsgemäßen Elektrofahrzeugen verwendet werden kann.

Im Folgenden wird ein Ausführungsbeispiel der Erfindung näher dargestellt.

Es zeigt:
- FIG: ein erfindungsgemäßes Elektrofahrzeug.

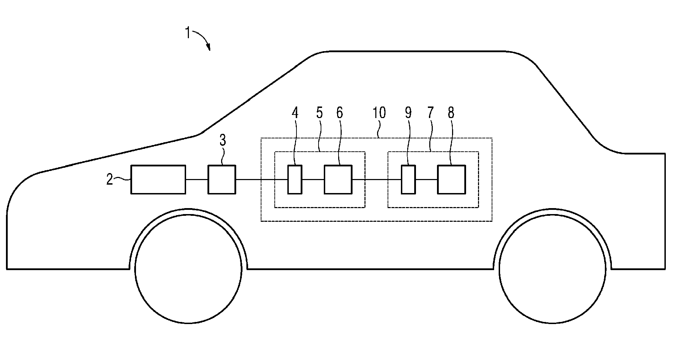

In der Figur ist ein Elektrofahrzeug 1 gemäß der Erfindung dargestellt, welches einen Elektromotor 2, eine Batterie 3, sowie eine erste Schnittstelleneinrichtung 4 und einen ersten Aufnahmeplatz 5 zur Aufnahme eines Generators 6 aufweist.

Der Generator 6 ist hierbei im serienmäßigen Lieferumfang des Elektrofahrzeugs 1 nicht enthalten, sondern wird nur bedarfsweise auf einfache Weise durch einen beliebigen Fahrzeugnutzer in den ersten Aufnahmeplatz 5 temporär eingebracht und mittels der ersten Schnittstelleneinrichtung 4 mit der Batterie 3 verbunden.

Das erfindungsgemäße Elektrofahrzeug 1 weist weiterhin bevorzugt einen zweiten Aufnahmeplatz 7 zur Aufnahme eines mobilen Brennstofftanks 8 auf. Hierbei wird ebenfalls der Gedanke realisiert, dass ein permanentes Mitführen eines Brennstofftanks im Elektrofahrzeug 1 nicht erforderlich ist, sondern allenfalls bei Fahrten über größere Entfernungen benötigt wird. Eine zweite Schnittstelleneinrichtung 9 dient zum leichten Ein- und Ausbau des mobilen Brennstofftanks 8 und zu dessen Verbindung mit dem mobilen Verbrennungsmotor 6.

Der mobile Verbrennungsmotor 6 sowie der mobile Brennstofftank 8 können als eine Baueinheit 10 ausgebildet sein, so dass die größte Gewichtsersparnis des serienmäßigen Elektrofahrzeugs 1 erreicht ist. Die Baueinheit 10 wird nämlich nur bedarfsweise im Falle von geforderten hohen Reichweiten in das Elektrofahrzeug 1 eingesetzt und bei wegfallendem Bedarf wieder entfernt.

## Patentansprüche

1. Elektrofahrzeug (1), mit:
einem Elektromotor (2) als Antriebsmotor,
einer aufladbaren Batterie (3) zur Versorgung des Elektromotors (2) mit elektrischer Energie,
**gekennzeichnet durch**
einen ersten Aufnahmeplatz (5) zur Aufnahme eines Generators (6) zur Erzeugung von elektrischer Energie,
eine erste Schnittstelleneinrichtung (4) zur Verbindung der Batterie (3) mit dem Generator (6), so dass ein Laden der Batterie (3) mittels vom Generator (6) erzeugter elektrischer Energie ermöglicht ist, wobei der erste Aufnahmeplatz (5) zur temporären Aufnahme des Generators (6) vorbereitet, aber nicht permanent belegt ist.

2. Elektrofahrzeug (1) nach Anspruch 1, wobei der Generator (6) ein mobiler Verbrennungsmotor ist.

3. Elektrofahrzeug (1) nach Anspruch 2, wobei das Elektrofahrzeug (1) weiterhin einen zweiten Aufnahmeplatz (7) zur Aufnahme eines mobilen Brennstofftanks (8) aufweist.

4. Elektrofahrzeug (1) nach Anspruch 3, wobei das Elektrofahrzeug (1) oder der mobile Verbrennungsmotor (6) oder der mobile Brennstofftank (8) eine zweite Schnittstelleneinrichtung (9) zur Verbindung des mobilen Verbrennungsmotors (6) mit dem mobilen Brennstofftank (8) aufweist.

5. Elektrofahrzeug (1) nach Anspruch 4, wobei der mobile Verbrennungsmotor (6) und der mobile Brennstofftank (8) als eine Baueinheit (10) ausgebildet sind.

6. Verfahren zum Betrieb eines Elektrofahrzeugs (1), wobei das Elektrofahrzeug (1) umfasst:
einen Elektromotor (2) als Antriebsmotor,
eine aufladbaren Batterie (3) zur Versorgung des Elektromotors (2) mit elektrischer Energie,
einem ersten Aufnahmeplatz (5) zur Aufnahme eines Generators (6) zur Erzeugung von elektrischer Energie,
eine erste Schnittstelleneinrichtung (4) zur Verbindung der Batterie (3) mit dem Generator (6), so dass ein Laden der Batterie (3) mittels vom Generator (6) erzeugter elektrischer Energie ermöglicht ist, mit folgenden Schritten:
- Fahren des Elektrofahrzeugs (1) durch einen Fahrzeugnutzer zu einem Anbieter von mobilen Verbrennungsmotoren (6),
- Entgegennahme eines auf den ersten Aufnahmeplatz (5) und die erste Schnittstelleneinrichtung (4) abgestimmten mobilen Verbrennungsmotors (6) vom Anbieter,
- Einbringen des mobilen Verbrennungsmotors (6) in den ersten Aufnahmeplatz (5) durch den Fahrzeugnutzer,
- Verbinden des mobilen Verbrennungsmotors (6) mit der Batterie (3) mittels der ersten Schnittstelleneinrichtung (4) durch den Fahrzeugnutzer, und
- Fahren des Elektrofahrzeugs (1) mit eingebautem mobilen Verbrennungsmotor (6), wobei zur Reichweitenerhöhung des Elektrofahrzeugs (6) im Weiteren der mobile Verbrennungsmotor (6) als Ladequelle für die Batterie (3) arbeitet.

7. Verfahren nach Anspruch 6, wobei der Anbieter ein Verleiher von mobilen Verbrennungsmotoren (6) ist.
